# FASCICULE DE BREVET EUROPEEN

(11) **EP 3 418 137 B1**
(45) Date de publication et mention de la délivrance du brevet: **22.02.2023**
(21) Numéro de dépôt: 18177419.1
(22) Date de dépôt: 12.06.2018
(51) Int. Cl.: B60T 8/172

(54) **PROCEDE POUR DETERMINER LA VITESSE DE REFERENCE UTILISEE PAR UN ANTIENRAYEUR D'UN VEHICULE FERROVIAIRE, ET DISPOSITIF ANTIENRAYEUR METTANT EN OEUVRE UN TEL PROCEDE**
VERFAHREN ZUR BESTIMMUNG DER VON EINER GLEITSCHUTZVORRICHTUNG EINES SCHIENENFAHRZEUGS VERWENDETEN REFERENZGESCHWINDIGKEIT, UND GLEITSCHUTZVORRICHTUNG ZUR UMSETZUNG DIESES VERFAHRENS
METHOD FOR DETERMINING THE REFERENCE SPEED USED BY AN ANTI-SKID DEVICE USED BY A RAILWAY VEHICLE, AND ANTI-SKID DEVICE IMPLEMENTING SUCH A METHOD

(30) Priorité: 23.06.2017 FR 1755758
(43) Date de publication de la demande: 26.12.2018
(73) Titulaire: SNCF Voyageurs, 93200 Saint-Denis (FR)
(72) Inventeur: LANGLOIS, Bruno, 75016 PARIS (FR); CHAVAGNAT, Richard, 91800 BOUSSY SAINT ANTOINE (FR)
(74) Mandataire: IPAZ

(56) Documents cités:
- DE-A1-102005 001 403
- FR-A1- 2 722 748
- US-A1- 2008 051 967

## Description

La présente invention concerne un procédé pour déterminer la vitesse de référence utilisée par un antienrayeur d'un véhicule ferroviaire. Elle concerne également un dispositif antienrayeur mettant en oeuvre un tel procédé, et un véhicule ferroviaire mettant en oeuvre un tel procédé et/ou un tel dispositif antienrayeur.

Le domaine de l'invention est le domaine ferroviaire, et plus particulièrement le domaine des antienrayeurs pour véhicules ferroviaires.

### Etat de la technique

Le Document US 2008/051967 A1 décrit un procédé pour contrôler le dérapage et/ou de patinage des roues d'un véhicule ferroviaire. Le procédé comprend une mesure de l'accélération longitudinale d'un véhicule, en déduit la vitesse longitudinale du véhicule, et compare la vitesse du véhicule à la vitesse mesurée d'une roue du véhicule.

Dans un véhicule ferroviaire, les antienrayeurs évitent le blocage des roues ou des essieux lors du freinage, en modulant l'effort de freinage de manière à éviter un blocage de la roue, ou de l'essieu.

Un antienrayeur entre en fonction lorsqu'il détecte qu'une roue présente une vitesse trop faible par rapport à une vitesse, dite de référence, préalablement estimée. Il relâche, alors, le frein de la roue en enrayage, jusqu'à ce que la roue ait retrouvé une vitesse proche de la vitesse de référence.

Actuellement, la vitesse de référence utilisée par un antienrayeur est estimée d'une part à partir des vitesses mesurées de chaque roue protégée par l'antienrayeur, et d'autre part à partir de la décélération maximale possible dans les meilleures conditions d'adhérence, c'est-à-dire environ 1,5 m/s².

Cependant, l'estimation actuelle de la vitesse de référence, si elle donne satisfaction dans la plupart des situations, présente des limites en situation de faible adhérence étendue. Dans une telle situation, il arrive que la vitesse d'une ou plusieurs roues décroisse progressivement, en restant dans le seuil acceptable, jusqu'à devenir nulle, bien que le véhicule ferroviaire continue à se déplacer.

Or, une telle situation entraîne un dommage de la roue ou de l'essieu, par exemple en créant des méplats sur la roue, qui nécessite une intervention de maintenance lourde et entraîne l'indisponibilité de véhicules ferroviaires pour l'exploitation.

Un but de la présente invention est de remédier à ces inconvénients.

Un autre but de l'invention est de proposer un procédé et un dispositif permettant de déterminer de manière plus précise la vitesse de référence utilisée par un antienrayeur d'un véhicule ferroviaire.

Un autre but de l'invention est de proposer un procédé et un dispositif permettant de mieux anticiper un enrayage des roues d'un véhicule ferroviaire.

### Exposé de l'invention

L'invention permet d'atteindre au moins l'un de ces buts par un procédé pour déterminer une vitesse de référence utilisée par un antienrayeur d'un véhicule ferroviaire en mouvement sur une voie ferrée, comprenant au moins une itération des étapes suivantes :
- mesure d'au moins une vitesse réelle d'une roue ou d'un essieu dudit véhicule ;
- mesure de la décélération réelle dudit véhicule ;
- détermination de ladite vitesse de référence en fonction de ladite au moins une vitesse réelle et de ladite décélération réelle mesurées.

Ainsi, le procédé selon l'invention propose de déterminer la vitesse de référence utilisée par un antienrayeur d'un véhicule ferroviaire, non pas en se basant sur un seuil maximum de décélération prédéterminé, mais sur une valeur de décélération réelle du véhicule ferroviaire en mesurant ladite décélération.

Ce faisant, le procédé selon l'invention permet de déterminer la vitesse de référence utilisée par l'antienrayeur de manière plus précise et plus proche de la situation réelle du véhicule ferroviaire, à tout moment. Par conséquent, le glissement de la roue est détecté plus tôt, et il est possible de relâcher l'effort de freinage de manière plus anticipée, ce qui permet de réduire, voire de supprimer, les méplats sur les roues liés aux enrayages.

De plus, les situations où l'ensemble des roues partent progressivement en glissement sont également détectées avec le procédé selon l'invention.

Avantageusement, lorsque l'antienrayeur est associé à plusieurs roues, c'est la vitesse mesurée de la roue qui tourne le plus vite qui peut être prise en compte pour la détermination de la vitesse de référence utilisée par ledit antienrayeur, comme valeur minimale.

Avantageusement, le procédé selon l'invention peut en outre comprendre une mesure d'une pente du véhicule ferroviaire sur la voie ferrée, la détermination de la vitesse de référence utilisée par l'antienrayeur étant en outre réalisée en fonction de ladite pente.

Ainsi, il est possible d'ajuster la vitesse de référence en fonction de la pente également. Par exemple, lorsque la pente est négative (descendante), il est possible de revoir la vitesse de référence à la hausse, et lorsque la pente est positive (montante) alors il est possible de revoir la vitesse de référence à la baisse.

Avantageusement, le procédé selon l'invention peut en outre comprendre une étape de filtrage de type Kalman d'au moins un signal de décélération et/ou d'au moins un signal de vitesse.

Un tel filtrage permet de réduire les bruits et d'augmenter la précision des valeurs obtenues à partir des signaux de mesure.

Cette étape de filtrage peut être réalisée en même temps que, ou après, l'étape de détermination de la vitesse de référence.

Suivant un autre aspect de l'invention, il est proposé un procédé de régulation d'un effort de freinage appliqué à une roue d'un véhicule ferroviaire, ladite roue étant associée à un antienrayeur, ledit procédé comprenant les étapes suivantes pour ladite roue :
- estimation d'une vitesse de référence utilisée par ledit antienrayeur, par le procédé selon l'invention ;
- mesure de la vitesse de ladite roue ; et
- lorsque la vitesse de ladite roue est inférieure à ladite vitesse de référence, modification dudit effort de freinage appliqué à ladite roue.

En particulier, l'étape de modification de l'effort de freinage peut comprendre une diminution de l'effort de freinage appliquée à la roue, voire un relâchement du freinage appliqué à ladite roue.

Suivant encore un autre aspect de la présente invention, il est proposé un antienrayeur pour au moins une roue d'un véhicule ferroviaire, comprenant des moyens configurés pour mettre en oeuvre toutes les étapes du procédé selon l'invention pour déterminer la vitesse de référence utilisée par ledit antienrayeur.

Suivant encore un autre aspect de la présente invention, il est proposé un dispositif antienrayeur pour au moins une roue d'un véhicule ferroviaire, comprenant :
- au moins un moyen de mesure de la vitesse de ladite roue,
- au moins un moyen de mesure d'une décélération réelle dudit véhicule ferroviaire, et éventuellement d'une pente d'une voie ferrée sur laquelle ledit véhicule ferroviaire est en mouvement, et
- au moins un antienrayeur ;
configurés pour mettre en oeuvre toutes les étapes du procédé selon l'invention pour déterminer la vitesse de référence utilisée par ledit antienrayeur.

L'antienrayeur peut être commun à plusieurs roues, et en particulier à plusieurs essieux, du véhicule ferroviaire. Dans ce cas, le moyen de mesure de la décélération peut avantageusement être également commun audites roues, et en particulier audits essieux.

Ainsi, le coût du dispositif antienrayeur est diminué.

Suivant un exemple de réalisation non limitatif, le moyen de mesure d'une décélération peut comprendre, ou être :
- une centrale inertielle, ou
- au moins un accéléromètre.

De plus, le moyen de mesure d'une décélération peut avantageusement être intégré dans l'antienrayeur, ou dans un caisson comprenant ledit antienrayeur.

Le dispositif antienrayeur peut comprendre un moyen de mesure de vitesse pour chaque roue individuellement.

Un tel moyen de mesure de vitesse peut, par exemple, comprendre un odomètre, ou tout autre dispositif de mesure de vitesse pour roue.

Suivant encore un autre aspect de la même invention, il est proposé un véhicule ferroviaire équipé :
- de moyens configurés pour mettre en oeuvre toutes les étapes du procédé selon l'invention ; et/ou
- d'un dispositif antienrayeur selon l'invention.

Un tel véhicule ferroviaire peut être un bogie, un train, un tramway ou tout autre véhicule ferroviaire prévu pour circuler sur une voie ferrée.

### Description des figures et modes de réalisation

D'autres avantages et caractéristiques apparaîtront à l'examen de la description détaillée d'un mode de réalisation nullement limitatif, et des dessins annexés sur lesquels
- la FIGURE 1 est une représentation schématique, sous la forme d'un diagramme, d'un exemple de réalisation non limitatif d'un procédé selon l'invention de détermination de la vitesse de référence utilisée par un antienrayeur ;
- la FIGURE 2 est une représentation schématique, sous la forme d'un diagramme, d'un exemple de réalisation non limitatif d'un procédé selon l'invention d'ajustement de l'effort de freinage appliqué à une roue d'un véhicule ferroviaire ; et
- la FIGURE 3 est une représentation schématique d'un exemple de réalisation non limitatif d'un dispositif selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieur.

Sur les figures les éléments communs à plusieurs figures conservent la même référence.

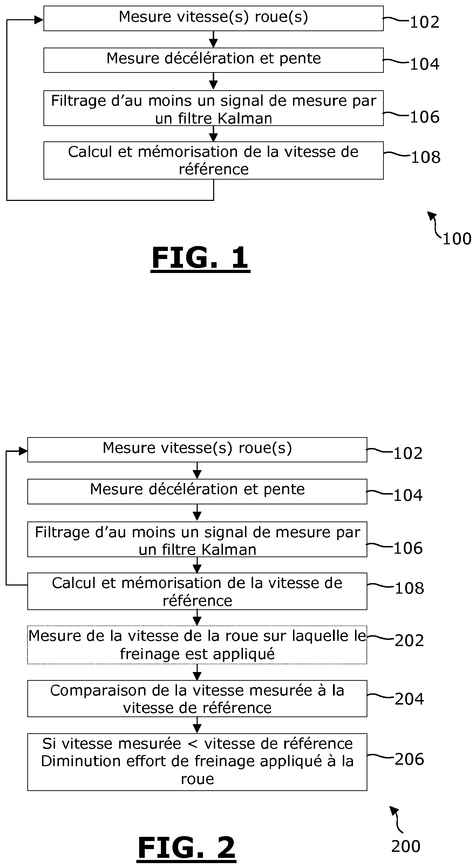

La FIGURE 1 est une représentation schématique, sous la forme d'un diagramme, d'un exemple de réalisation non limitatif d'un procédé d'estimation d'une vitesse de référence utilisée par un antienrayeur selon l'invention.

Le procédé 100 représenté sur la FIGURE 1, comprend une étape 102 de mesure d'au moins une vitesse réelle d'une ou de plusieurs roues d'un véhicule ferroviaire. Une telle mesure de vitesse peut être réalisée par un odomètre associé à chaque roue du véhicule ferroviaire, et fournissant un signal de mesure de vitesse.

Une étape 104 réalise une mesure d'une décélération du véhicule ferroviaire et d'une pente de la voie ferrée sur laquelle circule le véhicule ferroviaire, par exemple par une centrale inertielle ou un accéléromètre.

Lors d'une étape 106, un filtrage Kalman est appliqué aux signaux mesurés pour éliminer les bruits sur ces signaux.

Lors d'une étape 108 la vitesse de référence utilisée par l'antienrayeur est calculée en fonction :
- de la vitesse mesurée de la roue qui tourne le plus vite,
- de la décélération mesurée du véhicule ferroviaire, et
- de la pente mesurée de la voie ferrée.

Le procédé 100 est réitéré à une fréquence prédéterminée, par exemple toutes les secondes ou tous les dixièmes de seconde, pour mettre à jour la vitesse de référence.

La FIGURE 2 est une représentation schématique, sous la forme d'un diagramme, d'un exemple de réalisation non limitatif d'un procédé d'ajustement de l'effort de freinage appliqué à une roue d'un véhicule ferroviaire, selon l'invention.

Le procédé 200 comprend toutes les étapes du procédé 100 de la FIGURE 1 qui sont réitérées à une fréquence prédéterminée.

Lorsqu'un freinage est appliqué à une roue, la vitesse de la roue sur laquelle le freinage est appliqué est mesurée lors d'une étape 202.

Alternativement, cette étape 202 peut ne pas être réalisée. Dans ce cas, c'est la vitesse mesurée pour cette roue, lors de l'étape 102 qui est prise en compte.

Lors d'une étape 204, la vitesse de la roue est comparée à la vitesse de référence calculée et mémorisée lors de l'étape 108.

Si la vitesse mesurée pour la roue est supérieure ou égale à la vitesse de référence, alors cela signifie que la roue n'est pas enrayée et aucune action n'est entreprise.

Si la vitesse mesurée pour la roue est substantiellement inférieure à la vitesse de référence, alors cela signifie que la roue est enrayée. Dans ce cas, l'effort de freinage appliqué à cette roue est diminué, voire annulé, en relâchant partiellement ou totalement le freinage appliqué à la roue, lors d'une étape 206.

Lorsque l'antienrayeur est associé à plusieurs roues, alors les étapes 202 à 204 sont réalisées indépendamment pour chacune de ces roues, en particulier en même temps.

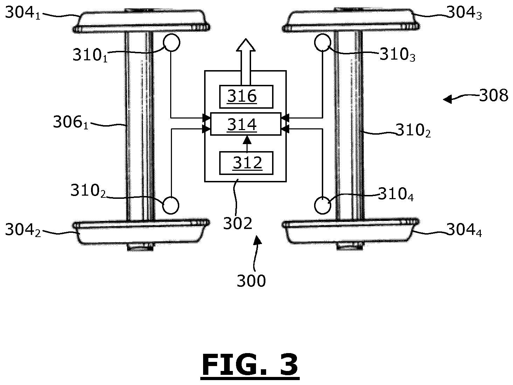

La FIGURE 3 est une représentation schématique d'un exemple de réalisation non limitatif d'un dispositif antienrayeur selon l'invention.

Le dispositif antienrayeur 300, représenté sur la FIGURE 2, comprend un antienrayeur 302 associé à quatre roues 304₁-304₄ de deux essieux 306₁ et 306₂ formant un bogie 308. L'antienrayeur 302 est donc commun aux quatre roues 304₁-304₄ et est utilisé pour éviter un enrayage de chacune des roues 304₁-304₄.

Le dispositif antienrayeur 300 comprend en outre, pour chaque roue 304₁-304₄ un odomètre, respectivement 310₁-310₄, pour mesurer la vitesse de chaque roue 304₁-304₄.

De plus, le dispositif antienrayeur 300 comprend une centrale inertielle 312 commune aux autres roues 304₁-304₄. Dans l'exemple représenté sur la FIGURE 3, la centrale inertielle 312 est intégrée dans l'antienrayeur commun 302. Cette centrale inertielle 312 mesure la décélération du véhicule ferroviaire, en particulier du bogie 308, ainsi que la pente de la voie ferrée sur laquelle circule le bogie 308.

Les signaux mesurés par les odomètres 310₁-310₄ et la centrale inertielle 312 sont communiqués à un calculateur 314 de l'antienrayeur 302. Ce dernier filtre les signaux mesurés puis détermine la vitesse de référence utilisée par l'antienrayeur, tel que décrit plus haut.

De plus, le calculateur 314 compare la vitesse de chaque roue 304₁-304₄ à la vitesse de référence.

Lorsque la vitesse d'une roue 304₁-304₄ est inférieure à la vitesse de référence, alors une requête de diminution, ou d'arrêt, du freinage appliqué à cette roue est émise, directement ou indirectement, vers le dispositif de freinage de cette roue, par exemple grâce à un module de communication 316, filaire ou sans fil, de l'antienrayeur.

Bien entendu, l'invention n'est pas limitée aux exemples détaillés ci-dessus et de nombreux aménagements peuvent être apportés sans sortir du cadre de l'invention.

Par exemple, l'antienrayeur peut être associé à un nombre de roues différent.

De plus, la centrale inertielle peut ne pas être intégrée dans l'antienrayeur.

De plus la centrale inertielle peut être remplacé par au moins un accéléromètre dans les exemples décrits.

## Revendications

1. Procédé (100) pour déterminer une vitesse de référence utilisée par un antienrayeur (302) d'un véhicule ferroviaire (308) en mouvement sur une voie ferrée, comprenant au moins une itération des étapes suivantes :
- mesure (102) d'au moins une vitesse réelle d'une roue (304₁-304₄) ou d'un essieu (306₁-306₂) dudit véhicule (308) ;
- mesure (104) de la décélération réelle dudit véhicule (308) ;
- détermination (108) de ladite vitesse de référence en fonction de ladite au moins une vitesse réelle et de ladite décélération réelle mesurées.

2. Procédé (100) selon la revendication précédente, **caractérisé en ce qu'**il comprend en outre une mesure (104) d'une pente du véhicule ferroviaire (308) sur la voie ferrée, la détermination (108) de la vitesse de référence utilisée par l'antienrayeur (302) étant en outre réalisée en fonction de ladite pente.

3. Procédé (100) selon l'une quelconque des revendications précédentes, **caractérisé en ce qu'**il comprend en outre une étape de filtrage (106) de type Kalman d'au moins d'un signal de décélération et/ou d'au moins un signal de vitesse.

4. Procédé (200) de régulation d'un effort de freinage appliqué à une roue (304₁-304₄) d'un véhicule ferroviaire (308), ladite roue (304₁-304₄) étant associée à un antienrayeur (302), ledit procédé (200) comprenant les étapes suivantes pour ladite roue (304₁-304₄) :
- estimation d'une vitesse de référence utilisée par ledit antienrayeur (302), par le procédé (100) selon l'une quelconque des revendications précédentes ;
- mesure (102,202) de la vitesse ladite roue (304₁-304₄) ; et
- lorsque la vitesse de ladite roue (304₁-304₄) est inférieure à ladite vitesse de référence, modification dudit effort de freinage appliqué à ladite roue (304₁-304₄).

5. Antienrayeur (302) pour au moins une roue (304₁-304₄) d'un véhicule ferroviaire (308), comprenant des moyens configurés pour mettre en oeuvre toutes les étapes du procédé (100) selon l'une quelconque des revendications 1 à 3 pour déterminer la vitesse de référence utilisée par ledit antienrayeur (302).

6. Dispositif antienrayeur (300) pour au moins une roue (304₁-304₄) d'un véhicule ferroviaire (308), comprenant :
- au moins un moyen (310₁-310₄) de mesure de la vitesse de ladite roue (304₁-304₄),
- au moins un moyen (312) de mesure d'une décélération réelle dudit véhicule ferroviaire (308), et
- au moins un antienrayeur ;
configurés pour mettre en oeuvre toutes les étapes du procédé selon l'une quelconque des revendications 1 à 3 pour déterminer la vitesse de référence utilisée par ledit antienrayeur (302).

7. Dispositif (300) selon la revendication précédente, **caractérisé en ce que** l'antienrayeur (302) est commun à plusieurs roues (304₁-304₄), et en particulier à plusieurs essieux (306₁-306₂), ledit moyen (312) de mesure d'une décélération étant également commun audites roues (304₁-304₄), et en particulier audits essieux (306₁-306₂).

8. Dispositif (300) selon l'une quelconque des revendications 6 ou 7, **caractérisé en ce que** le moyen de mesure d'une décélération comprend une centrale inertielle (312), ou au moins un accéléromètre.

9. Dispositif (300) selon l'une quelconque des revendications 6 à 8, **caractérisé en ce que** le moyen (312) de mesure d'une décélération est intégré dans l'antienrayeur (302).

10. Véhicule ferroviaire (308) équipé :
- de moyens configurés pour mettre en oeuvre toutes les étapes du procédé (100;300) selon l'une quelconque des revendications 1 à 4 ; et/ou
- d'un dispositif antienrayeur (300) selon l'une quelconque des revendications 6 à 9.

## Patentansprüche

1. Verfahren (100) zum Bestimmen einer Referenzgeschwindigkeit, die von einem Gleitschutz (302) eines Schienenfahrzeugs (308) verwendet wird, das sich auf einem Gleis bewegt, umfassend mindestens eine Iteration der folgenden Schritte:
- Messen (102) mindestens einer Ist-Geschwindigkeit eines Rades (304₁-304₄) ODER einer Achse (306₁-306₂) des Fahrzeugs (308);
- Messen (104) der Ist-Bremsverzögerung des Fahrzeugs (308);
- Bestimmen (108) der Referenzgeschwindigkeit in Abhängigkeit von der mindestens einen gemessenen Ist-Geschwindigkeit und der gemessenen Ist-Bremsverzögerung.

2. Verfahren (100) nach dem vorhergehenden Anspruch, **dadurch gekennzeichnet, dass** es ferner eine Messung (104) einer Neigung des Schienenfahrzeugs (308) auf dem Gleis umfasst, wobei die Bestimmung (108) der von dem Gleitschutz (302) verwendeten Referenzgeschwindigkeit ferner in Abhängigkeit von der Neigung durchgeführt wird.

3. Verfahren (100) nach einem der vorhergehenden Ansprüche, **dadurch gekennzeichnet, dass** es ferner einen Schritt des Filterns (106) mit einem Kalman-Filter mindestens eines Bremsverzögerungssignals und/oder mindestens eines Geschwindigkeitssignals umfasst.

4. Verfahren (200) zum Regeln einer auf ein Rad (304₁-304₄) eines Schienenfahrzeugs (308) angewendeten Bremskraft, wobei das Rad (304₁-304₄) einem Gleitschutz (302) zugeordnet ist, wobei das Verfahren (200) bei dem Rad (304₁-304₄) die folgenden Schritte umfasst:
- Schätzen einer von dem Gleitschutz (302) verwendeten Referenzgeschwindigkeit durch das Verfahren (100) nach einem der vorhergehenden Ansprüche;
- Messen (102, 202) der Geschwindigkeit des Rades (304₁-304₄); und
- wenn die Geschwindigkeit des Rades (304₁-304₄) niedriger als die Referenzgeschwindigkeit ist, Ändern der auf das Rad (304₁-304₄) angewendeten Bremskraft.

5. Gleitschutz (302) für mindestens ein Rad (304₁-304₄) eines Schienenfahrzeugs (308), umfassend Mittel, die ausgelegt sind, um alle Schritte des Verfahrens (100) nach einem der Ansprüche 1 bis 3 durchzuführen, um die von dem Gleitschutz (302) verwendete Referenzgeschwindigkeit zu bestimmen.

6. Gleitschutzvorrichtung (300) für mindestens ein Rad (304₁-304₄) eines Schienenfahrzeugs (308), umfassend:
- mindestens ein Mittel (310₁-310₄) zum Messen der Geschwindigkeit des Rades (304₁-304₄),
- mindestens ein Mittel (312) zum Messen einer Ist-Bremsverzögerung des Schienenfahrzeugs (308), und
- mindestens einen Gleitschutz;
die ausgelegt sind, um alle Schritte des Verfahrens nach einem der Ansprüche 1 bis 3 durchzuführen, um die von dem Gleitschutz (302) verwendete Referenzgeschwindigkeit zu bestimmen.

7. Vorrichtung (300) nach dem vorhergehenden Anspruch, **dadurch gekennzeichnet, dass** der Gleitschutz (302) mehreren Rädern (304₁-304₄) und insbesondere mehreren Achsen (306₁-306₂) gemeinsam zugeordnet ist, wobei die Mittel (312) zum Messen einer Bremsverzögerung ebenfalls den Rädern (304₁-304₄) und insbesondere den Achsen (306₁-306₂) gemeinsam zugeordnet sind.

8. Vorrichtung (300) nach einem der Ansprüche 6 oder 7, **dadurch gekennzeichnet, dass** das Mittel zum Messen einer Bremsverzögerung eine inertiale Messeinheit (312) oder mindestens einen Beschleunigungsmesser umfasst.

9. Vorrichtung (300) nach einem der Ansprüche 6 bis 8, **dadurch gekennzeichnet, dass** das Mittel (312) zum Messen einer Bremsverzögerung in dem Gleitschutz (302) integriert ist.

10. Schienenfahrzeug (308), das ausgestattet ist mit:
- Mitteln, die ausgelegt sind, um alle Schritte des Verfahrens (100; 300) nach einem der Ansprüche 1 bis 4 durchzuführen; und/oder
- einer Gleitschutzvorrichtung (300) nach einem der Ansprüche 6 bis 9.

## Claims

1. Method (100) for determining a reference speed used by a wheel slide protection (302) of a railway vehicle (308) in motion on a railway track, comprising at least one iteration of the following steps:
- measurement (102) of at least one actual speed of a wheel (304₁-304₄) or of an axle (306₁-306₂) of said vehicle (308);
- measurement (104) of the actual deceleration of said vehicle (308);
- determination (108) of said reference speed on the basis of said at least one actual speed measured and of said actual deceleration measured.

2. Method (100) according to the preceding claim, **characterized in that** it further comprises measurement (104) of an incline of the railway vehicle (308) on the railway track, determination (108) of the reference speed used by the wheel slide protection (302) also being carried out on the basis of said incline.

3. Method (100) according to any of the preceding claims, **characterized in that** it further comprises a step of Kalman-type filtering (106) of at least one deceleration signal and/or of at least one speed signal.

4. Method (200) for regulating a braking force applied to a wheel (304₁-304₄) of a railway vehicle (308), said wheel (304₁-304₄) being associated with a wheel slide protection (302), said method (200) comprising the following steps for said wheel (304₁-304₄):
- estimation of a reference speed used by said wheel slide protection (302) using the method (100) according to any of the preceding claims;
- measurement (102, 202) of the speed of said wheel (304₁-304₄); and
- when the speed of said wheel (304₁-304₄) is lower than said reference speed, modification of said braking force applied to said wheel (304₁-304₄).

5. Wheel slide protection (302) for at least one wheel (304₁-304₄) of a railway vehicle (308), comprising means configured to implement all the steps of the method (100) according to any of claims 1 to 3 for determining the reference speed used by said wheel slide protection (302).

6. Wheel slide protection device (300) for at least one wheel (304₁-304₄) of a railway vehicle (308), comprising:
- at least one means (310₁-310₄) for measuring the speed of said wheel (304₁-304₄),
- at least one means (312) for measuring an actual deceleration of said railway vehicle (308), and
- at least one wheel slide protection;
configured to implement all the steps of the method according to any of claims 1 to 3 for determining the reference speed used by said wheel slide protection (302).

7. Device (300) according to the preceding claim, **characterized in that** the wheel slide protection (302) is common to a plurality of wheels (304₁-304₄), and in particular to a plurality of axles (306₁-306₂), said means (312) for measuring a deceleration also being common to said wheels (304₁-304₄), and in particular to said axles (306₁-306₂).

8. Device (300) according to either of claims 6 or 7, **characterized in that** the means for measuring a deceleration comprises an inertial unit (312), or at least one accelerometer.

9. Device (300) according to any of claims 6 to 8, **characterized in that** the means (312) for measuring a deceleration is integrated into the wheel slide protection (302).

10. Railway vehicle (308) equipped with:
- means configured to implement all the steps of the method (100; 300) according to any of claims 1 to 4; and/or
- a wheel slide protection device (300) according to any of claims 6 to 9.
